# EUROPÄISCHE PATENTANMELDUNG

(11) **EP 0 732 239 A1**
(43) Veröffentlichungstag der Anmeldung: **18.09.1996**
(21) Anmeldenummer: 96103618.3
(22) Anmeldetag: 08.03.1996
(51) Int. Cl.: B60R 21/20

(54) **Gassack-Aufprallschutz-System**

(30) Priorität: 14.03.1995 DE 19509165
(71) Anmelder: MST Automotive GmbH Automobil-Sicherheitstechnik, D-63743 Aschaffenburg (DE)
(72) Erfinder: Kreuzer, Martin, 63839 Kleinwallstadt (DE)
(74) Vertreter: Fuchs, Luderschmidt & Partner

(57) **Zusammenfassung**

Bei einem Gassack-Aufprallschutz-System für die Lenkung von Straßenfahrzeugen ist das schüsselförmige Lenkrad (1), in das ein Gassack (12) eingefaltet ist, mit der Lenkradnabe (2) an der Lenkspindel (8) befestigt, wobei die die Gaseintrittsöffnung des Gassacks (12) begrenzende Randzone gasdicht mit der Lenkradnabe (1) verbunden ist. Eine Verbesserung der Montagegerechtigkeit wird dadurch erreicht, daß die Gaseintrittsöffnung (13) des Gassacks (12) konzentrisch zu einem in der Lenkradnabe (2) angebrachten Durchgangsloch (10) angebracht und in der Lenkspindel (8) der Gasgenerator (18) untergebracht ist.

## Beschreibung

Die Erfindung betrifft ein Gassack-Aufprallschutz-System für die Lenkung von Straßenfahrzeugen, insbesondere Personenkraftwagen, bestehend aus der mit dem Lenkgetriebe verbundenen rohrförmigen Lenkspindel und dem an dieser kraft- und/oder formschlüssig mit der Lenkradnabe befestigten schüsselförmigen Lenkrad, mit zwischen Lenkradkranz und Lenkradnabe integriertem, eingefalteten Gassack, wobei dessen die Gaseintrittsöffnung begrenzende Randzone gasdicht mit der Lenkradnabe verbunden ist.

Der Forderung, wonach die Verletzungsschwere der Insassen von Straßenfahrzeugen, insbesondere von Personenkraftwagen, durch einen Unfall durch Anordnung passiver Sicherheitsmaßnahmen so klein wie möglich zu halten ist, wird insbesondere die im Lenkrad des Fahrzeugs integrierte und ggf. auch auf der Beifahrerseite hinter der Armaturentafel eingebaute Gassack-Aufprallschutz-Baueinheit gerecht. Eine solche Gassack-Aufprallschutz-Baueinheit ist im wesentlichen aus einem Gasgenerator, einem diesen tragenden Generatorträger und einem an oder um den Gasgenerator eingefalteten Gassack aufgebaut. Der Generatorträger hat außerdem die Aufgabe, das Flanschblech zur Befestigung des Gassacks im Bereich der die Gaseintrittsöffnung begrenzenden Randzone aufzunehmen. Eine rund um den Generatorträger angeordnete Klammerleiste hält die im allgemeinen aus Polyurethan-Integralschaum oder einem thermoplastischen Elastomer bestehende Abdeckung für den Gassack fest. Bei einem möglichen Aufprall auf ein massives Hindernis sprechen Beschleunigungsaufnehmer an, die im Frontteil und/oder im Fahrgastraum untergebracht sind, und nach wenigen Millisekunden fängt der Gassack an sich aufzublasen, indem der Zündstrom auf den Zünder des Gasgenerators, der wiederum die Zündpille und damit den Treibsatz zündet, geschaltet wird, so daß nach 40 bis 50 ms der Oberkörper des Insassen auf den voll aufgeblasenen Gassack auftrifft und der Insasse damit unverzüglich an der Fahrzeugverzögerung teilnimmt, wobei eine erträgliche, gleichmäßige Beschleunigung während der Verzögerungszeit wirkt (DE-B-2 347 255). Die Anordnung einer solchen Gassack-Aufprallschutz-Baueinheit nimmt nicht nur einen erheblichen Teil des Querschnitts des Lenkrads ein, sondern die Masse des Gasgenerators führt zu unerwünschten Schwingungen, die umfangreiche Dämpfungsmaßnahmen erforderlich machen.

Es ist deshalb in der DE-A-2 137 833 eine Gassack-Aufprallschutz-Vorrichtung für Kraftfahrzeuge mit in einem schüsselförmigen Lenkrad eingefaltetem Gassack vorgesehen, bei der die Randzone der Gaseintrittsöffnung des Gassacks auf der Nabe verschraubt ist und der Gassack mit einem zwischen der Lenkradspindel und einem diese umgebenden Mantelrohr verlaufenden, im Querschnitt kreisringförmigen Kanal in Verbindung steht. Außerhalb des Mantelrohrs ist ein an diesem befestigter Gasgenerator angeordnet, dessen Gasaustrittsöffnung in den kreisringförmigen Kanal einmündet. Im Falle eines möglichen Aufpralls auf ein massives Hindernis wird die Treibladung des Gasgenerators gezündet und das gebildete Gas strömt über eine entsprechende Durchbrechung des Mantelrohrs in den Kanal und von dort in den Gassack ein. Es ist jedoch von Nachteil, daß der außerhalb des Mantelrohrs angebrachte Gasgenerator beachtliche Abdichtungsmaßnahmen erfordert, damit eine sichere Einleitung des Gases in den kreisringförmigen Kanal gewährleistet ist. Zusätzlich muß auch das Mantelrohr selbst abgedichtet werden.

Es ist die Aufgabe der vorliegenden Erfindung, das eingangs beschriebene Gassack-Aufprallschutz-System so zu gestalten, daß mehrere fertigungtechnisch günstige Bauteile verbesserte Montageoperationen gewährleisten und aufwendige Abdichtungsmaßnahmen des Gasgenerators gegenüber der Lenkspindel unterbleiben können.

Die Lösung dieser Aufgabe besteht in den im Anspruch 1 angegebenen Merkmalen.

In den Unteransprüchen sind vorzugsweise Ausgestaltungen des Gegenstands gemäß den Merkmalen des Anspruchs 1 wiedergegeben.

Die mit dem erfindungsgemäßen Gassack-Aufprallschutz-System erzielten Vorteile sind insbesondere darin zu sehen, daß der Gasgenerator in unmittelbarer Nähe der Gaseintrittsöffnung des Gassacks angebracht ist und damit Pralleffekte durch die in der Lenkradspindel vorhandene Luftsäule vermieden werden. Da der Gasgenerator nicht in der Gassack-Aufprallschutz-Baueinheit integriert ist, kann dessen Baugröße deutlich verkleinert werden.

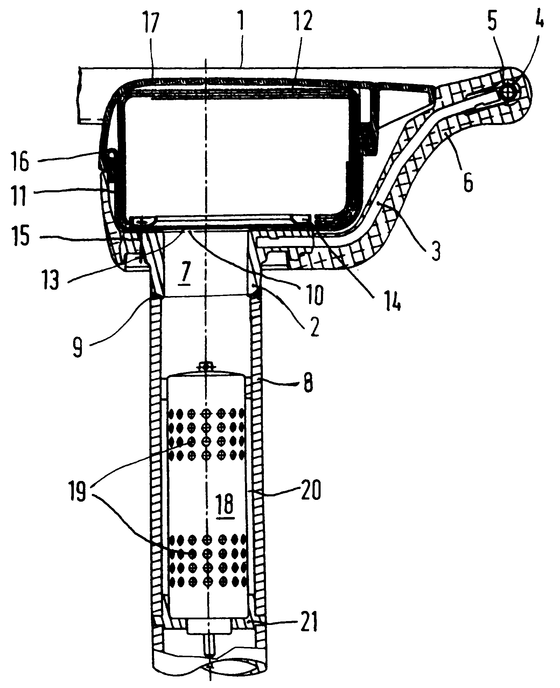

Die Erfindung ist in der Zeichnung anhand eines die Achse der Lenkspindel einschließenden Längsschnitts nachfolgend näher und beispielsweise erläutert.

Das Lenkrad (1) besteht aus der aus Aluminium-Druckguß hergestellten Lenkradnabe (2), in die die einen Enden der aus Stahl gefertigten Lenkradspeichen (3) eingegossen sind. Die anderen Enden der Lenkradspeichen (3) sind mit dem aus Stahlrohr hergestellten Lenkradkranz (4) über aus Aluminium-Druckguß hergestellte Muffen (5) verbunden. Der Lenkradkranz (4), die Lenkradspeichen (3) und die mit diesen verbundenen Muffen (5) sind mit einer Schicht (6) aus Polyurethan-Integralschaum ummantelt. Die ein axiales Durchgangsloch (7) aufweisende Lenkradnabe (2) ist an der aus einem Rohr gefertigten Lenkradspindel (8) durch eine Schweißung (9) befestigt. Auf der Lenkradnabe (2) ist ein mit einer in seinem Boden angebrachten Durchbrechung (10), die mit dem Durchgangsloch der Lenkradnabe (2) korrespondiert, versehener topfförmiger Gassackbehälter (11) angebracht. In dem Gassackbehälter (11) ist der Gassack (12) so eingefaltet, daß seine Gaseintrittsöffnung (13) mit der Durchbrechung (10) des Gassackbehälters (11) korrespondiert. Die die Durchbrechung (10) des Gassackbehälters (11) und die Gaseintrittsöffnung (13) des Gassacks begrenzenden, übereinander liegenden Randzonen sind durch einen Flansch (14), der über Schrauben (15) mit der Lenkradnabe (2) verspannt ist, gasdicht festgeklemmt. Der Rand des Gassackbehälters (11) besitzt eine nach außen angebogene Klammerleiste (16), durch die die aus Polyurethan-Integralschaum gebildete kappenartige Abdeckung (17) gehalten ist. In der Lenkspindel (8) ist ein rohrförmiger Gasgenerator (18) mit radial angebrachten Gasaustrittsöffnungen (19) so befestigt, daß zwischen dem Mantel der Lenkspindel (8) und dem Mantel des Gasgenerators (18) ein im Querschnitt kreisringzylinderförmiger Zwischenraum (20) vorhanden ist, über den das aus den Gasaustrittsöffnungen (19) austretende Gas in den Zwischenraum (20) austreten kann. In Fahrtrichtung ist die Lenkspindel (8) durch die Wand (21), in der der Boden des Gasgenerators (18) befestigt ist, gasdicht verschlossen. Das Lenkrad kann auch mit der Lenkspindel verschraubt oder verklemmt sein.

## Patentansprüche

1. Gassack-Aufprallschutz-System für die Lenkung von Straßenfahrzeugen, insbesondere Personenkraftwagen, bestehend aus der mit dem Lenkgetriebe verbundenen rohrförmigen Lenkspindel (8) und dem an dieser kraft- und/oder formschlüssig mit der Lenkradnabe (2) befestigten schüsselförmigen Lenkrad (1), mit zwischen Lenkradkranz (4) und Lenkradnabe integriertem, eingefalteten Gassack (12), wobei dessen die Gaseintrittsöffnung (13) begrenzende Randzone gasdicht mit der Lenkradnabe verbunden ist, dadurch gekennzeichnet, daß die Gaseintrittsöffnung (13) des Gassacks (12) konzentrisch zu einem in der Lenkradnabe (2) angebrachten Durchgangsloch (7) angebracht und in der Lenkspindel (8) ein Gasgenerator (18) angeordnet ist.

2. Gassack-Aufprallschutz-System nach Anspruch 1, dadurch gekennzeichnet, daß der Gasgenerator (18) radiale Gasaustrittsöffnungen (19) besitzt und zwischen dem Mantel der Lenkspindel (8) und dem Mantel des Gasgenerators (18) ein im Querschnitt kreisringförmiger Zwischenraum (20) vorhanden ist.

3. Gassack-Aufprallschutz-System nach Anspruch 1, dadurch gekennzeichnet, daß der lenkradseitige Deckel des Gasgenerators (18) mit axialen Gasaustrittsöffnungen versehen ist.

4. Gassack-Aufprallschutz-System nach einem der Ansprüche 1 bis 3, dadurch gekennzeichnet, daß der Gasgenerator (18) zwischen der Lenkradnabe (2) und einer die Lenkspindel (8) in Fahrtrichtung gasdicht verschließenden Wand (21) angeordnet ist.

5. Gassack-Aufprallschutz-System nach einem der Ansprüche 1 bis 4, dadurch gekennzeichnet, daß zwischen der Lenkradnabe (2) und der Lenkspindel (8) eine Schweiß-, Schraub- oder Klemm-Verbindung besteht.
